# EUROPÄISCHE PATENTSCHRIFT

(11) **EP 1 034 954 B1**
(45) Veröffentlichungstag und Bekanntmachung des Hinweises auf die Patenterteilung: **15.02.2006**
(21) Anmeldenummer: 00104701.8
(22) Anmeldetag: 03.03.2000
(51) Int. Cl.: B60J 7/00

(54) **Rollo-Sonnenschutz für ein Fahrzeugdach**
Roller sun-blind for vehicle roof
Store pare-soleil à enrouler pour toit de véhicule

(30) Priorität: 11.03.1999 DE 19910830
(43) Veröffentlichungstag der Anmeldung: 13.09.2000
(73) Patentinhaber: Webasto Vehicle Systems International GmbH, 82131 Stockdorf (DE)
(72) Erfinder: Dafara, Dino, Torino (IT); Pastore, Giacomo, Cafalette (To) (IT)
(74) Vertreter: Wiese, Gerhard

(56) Entgegenhaltungen:
- EP-A- 0 644 075
- DE-A- 4 105 865
- FR-A- 2 581 378

## Beschreibung

Die Erfindung betrifft einen Sonnenschutz für ein Fahrzeugdach gemäß dem Oberbegriff des Patentanspruchs 1.

Ein derartiger Sonnenschutz ist beispielsweise aus der FR 2 581 378 A1 A1 bekannt. Bei dieser ist eine separate Spannvorrichtung mit zwei federnd gegeneinander gelagerten Umlenkwalzen vorgesehen, über die die mit dem Auszugspriegel verbundenen Bänder in Form einer S-förmigen Schlaufe verlaufen. Durch den variablen Abstand der Umlenkwalzen werden Längendifferenzen kompensiert, die aus dem mehrlagigen Aufwickeln der Rollobahn resultieren. Die separate Spannvorrichtung bedeutet einen erhöhten Aufwand und beansprucht einen größeren Bauraum.

Aus der gattungsgemäßen EP 0 644 075 A1 ist ein Sonnenschutz-Einrichtung bekannt, bei der mit einem Ende über eine federbelastete Umlenkwalze geführte und am Auszugsspriegel befestigte Bänder für eine gleichmäßige Spannung einer Rollobahn und ein Kräftegleichgewicht am Auszugsspriegel in allen Bewegungsphasen sorgt.

Ein weiterer Sonnenschutz ist aus der DE 195 38 551 C1 bekannt. Bei diesem bekannten Sonnenschutz ist eine zweite Wickelspule am einer ersten Wickelspule gegenüberliegenden Querrand der Dachöffnung vorgesehen. Die Rollobahn ist bei diesem bekannten Sonnenschutz zur Hälfte transparent und zur anderen Hälfte opak ausgebildet und an beiden Wickelspulen gleichzeitig befestigt. Die Positionierung der unterschiedlich durchlässigen Bereiche der Rollobahn in der gewünschten Stellung erfolgt mittels elektrischer Antriebe mit Elektromotoren, von denen jeweils einer einer Wickelspule zugeordnet ist. Dieser bekannte Sonnenschutz erlaubt zwar eine Positionierung des opaken Rollobahnabschnitts in beliebiger Position, jedoch ausschließlich mit Hilfe des elektrischen Antriebs.

Aus der DE 43 37 311 C1 ist ein Sonnenschutz für eine seitliche bzw. hintere Scheibe eines Fahrzeugs bekannt, bei dem die Scheiben wahlweise mit dünnen Lamellen abdeckbar sind, die in seitlichen Rändern der Scheibe geführt sind. Die seitliche Führung der Lamellen umfaßt ein Band, das im Bereich der Führung mittels Umlenkrollen umgelenkt und so entsprechend der zueinander parallelen Lamellen gefaltet wird. Das Band ist unter Zug gesetzt, wobei sich aufgrund der drehbaren Umlenkrollen über die gesamte Höhe der jeweiligen Seitenscheibe eine gleichmäßige Zugspannung einstellt.

Aus der DE 197 45 866 C1 ist eine Rolloanordnung mit einer auf einer Wickelrolle aufwickelbaren Rollobahn bekannt, die eine Anzahl von querverlaufenden Schleppriegeln und am vorderen Ende einen Zugspriegel umfaßt. Sämtliche Spriegel sind seitlich mittels Gleitschuhen in Führungsschienen geführt.

Eine Aufgabe der vorliegenden Erfindung besteht darin, einen Sonnenschutz der eingangs genannten Art zu schaffen, der bei einfachem Aufbau und geringem Platzbedarf eine manuelle Positionierung der Rollobahn an beliebiger Stelle gewährleistet.

Gelöst wird diese Aufgabe durch die Merkmale des Anspruchs 1. Vorteilhafte Weiterbildungen der Erfindung sind in den Unteransprüchen angegeben.

Die erfindungsgemäße Rolloanordnung umfaßt einen Verbund aus Rollobahn und fest mit dieser verbundenen seitlichen Seilen, welche ebenso wie die Rollobahn mit ein und derselben Wickelspule verbunden und über eine Umlenkeinrichtung geführt sind, wobei eine Spanneinrichtung vorgesehen ist, um diesen Endlos-Verbund aus Rollobahn und Seilen stets gespannt zu halten. Durch diese Maßnahmen befindet sich der auf eine einzige Wickelspule gewickelte Verbund aus Rollobahn und Seilen stets im Kräftegleichgewicht, so daß dieser Verbund und damit die Rollobahn an beliebiger Stellung in der Dachöffnung positioniert werden kann. Die Verstellung der Rollobahn ist aufgrund des Kräftegleichgewichts problemlos manuell möglich. Grundsätzlich ist die genannte Feder als Spannmittel für den Verbund aus Rollobahn und Seilen auch in der Lage, zumindest einen Teil der Dicke des variierenden Rollobahnwickels auf der Wickelspule zu kompensieren. Der besondere Vorteil der Erfindung liegt darin, daß die Wickelflächen für die Seile im Bereich der Außenenden der Wickelspule nach außen konisch verjüngt derart gebildet sind, daß die Seile auf einer Spiralbahn laufen, die ein Abbild der variierenden Wickeldicke der Rollobahn auf der Wickelspule darstellt. Dadurch wird erreicht, daß die Spannung des Verbunds aus Rollobahn und Seilen ohne Überbelastung der Feder zur Spannung dieses Verbunds gewährleistet ist.

Um die manuelle Verstellung zu fördern, ist das Vorderende der Rollobahn mit einem Zugspriegel, bevorzugt in Gestalt einer Griffleiste, mit nach unten offener Griffmulde ausgebildet.

Die Umlenkeinrichtung umfaßt pro Seil zumindest eine Umlenkrolle, die federvorgespannt ist, um die erwünschte Spannung des Verbunds aus Rollobahn und Seilen zu gewährleisten. Alternativ kann unter Aufrechterhaltung des vorstehend angesprochenen Kräftegleichgewichts auch innerhalb der Seile eine Zugfeder bevorzugt in Form eines elastischen Seilabschnitts angeordnet sein.

Während die erfindungsgemäße Rolloeinrichtung problemlos in beliebiger Stellung manuell positionierbar ist, kann zusätzlich ein elektrischer Antrieb für die Wickelspule vorgesehen sein, um die Rollobahn per elektrischem Antrieb zu positionieren. In diesem Fall ist aufgrund des Verbunds aus Rollobahn und Seilen, angetrieben von ein und derselben Wickelspule, im Vergleich zu dem einleitend erläuterten Stand der Technik jedoch lediglich ein einziger Wickelmotor erforderlich, der aufgrund des vorhandenen Kräftegleichgewichts mit einer vergleichsweise niedrigen Leistung auskommt und entsprechend klein und kostengünstig gewählt werden kann.

Nachfolgend wird die Erfindung anhand der Zeichnungen beispielhaft näher erläutert; es zeigt:
- Fig. 1: eine schematische Ansicht eines Fahrzeugdachs,
- Fig. 2: schematisch eine dreidimensionale Ansicht einer Rolloeinrichtung zum Einbau in die Dachöffnung des Fahrzeugdachs von Fig. 1,
- Fig. 3: eine Längsschnittansicht der in das Fahrzeugdach von Fig. 2 eingebauten Rolloeinrichtung gemäß Fig. 2 entlang der Linie I-I von Fig. 1,
- Fig. 4: eine Längsschnittansicht der in das Fahrzeugdach von Fig. 2 eingebauten Rolloeinrichtung gemäß Fig. 2 entlang der Linie II-II von Fig. 1, und
- Fig. 5: eine Querschnitt-Teilansicht der eingebauten Rolloeinrichtung durch deren Wickelspule.

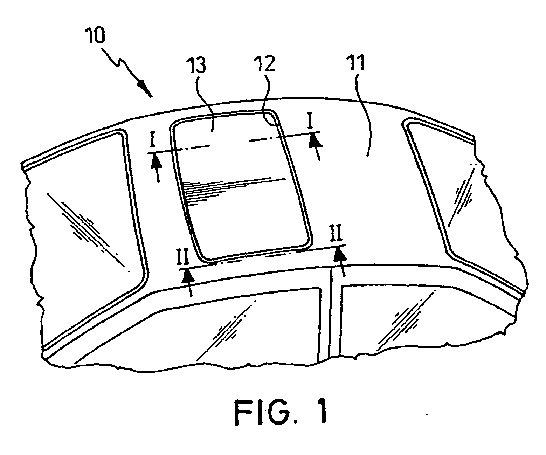

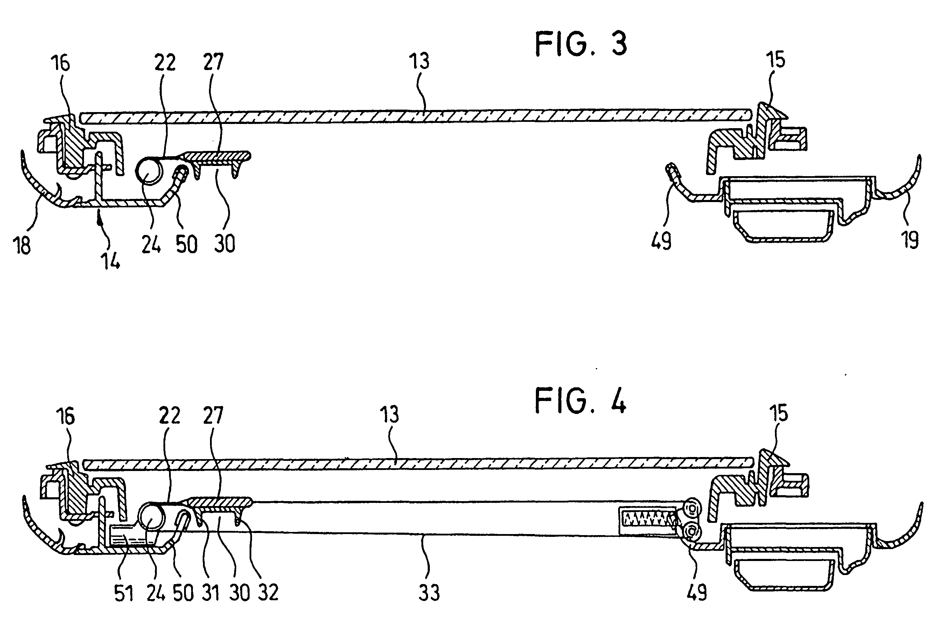

In Fig. 1 ist ein Fahrzeug 10 mit einem festen Fahrzeugdach 12 ausgestattet. In eine in dem Fahrzeugdach 11 vorgesehene Dachöffnung 12 ist ein Deckel 13 eingesetzt, wie in Fig. 3, 4 und 5 in Schnittansicht gezeigt. Bei dem Deckel 13 handelt es sich entweder um einen festinstallierten oder um einen öffnungsfahigen Deckel, beispielsweise eines Hebedachs, eines Schiebedachs, eines Schiebehebedachs oder eines Spoilerdachs. Der Deckel 13 besteht aus einem durchsichtigen oder durchscheinenden Werkstoff, wie beispielsweise Glas oder Acrylglas.

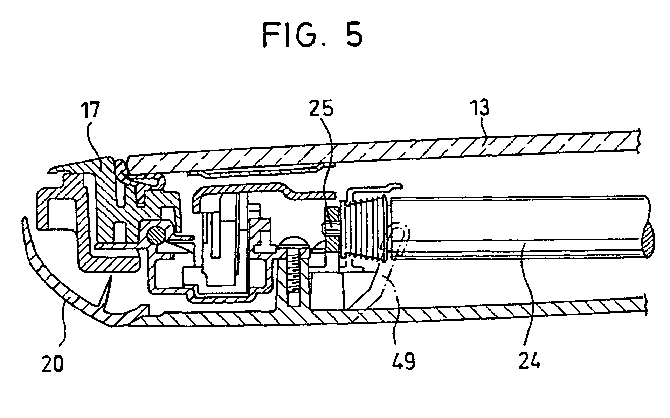

Begrenzt ist die rechteckige Dachöffnung 12 in an sich bekannter Weise durch eine rechteckige Rahmenanordnung 14, die fest mit der Innenseite des Fahrzeugdachs 11 verbunden ist und bezogen auf die Fahrtrichtung des Fahrzeugs 10 einen vorderen Rahmenteil 15 sowie einen hinteren Rahmenteil 16 umfaßt, wie in Fig. 3 und 4 gezeigt. Außerdem umfaßt die Rahmenanordnung 14 integral mit den vorderen und hinteren Rahmenteilen 15, 16 verbundene seitliche Rahmenteile, von denen in Fig. 5 das bezogen auf die Fahrtrichtung linke seitliche Rahmenteil 17 gezeigt ist. Die Rahmenanordnung 14 ist als Profiltewil aus Blech oder Kunststoff gebildet und nach unten in Richtung auf das Innere der Fahrgastzelle durch Teile des Fahrzeughimmels bzw. Verblendungsteile 18, 19 und 20 abgedeckt.

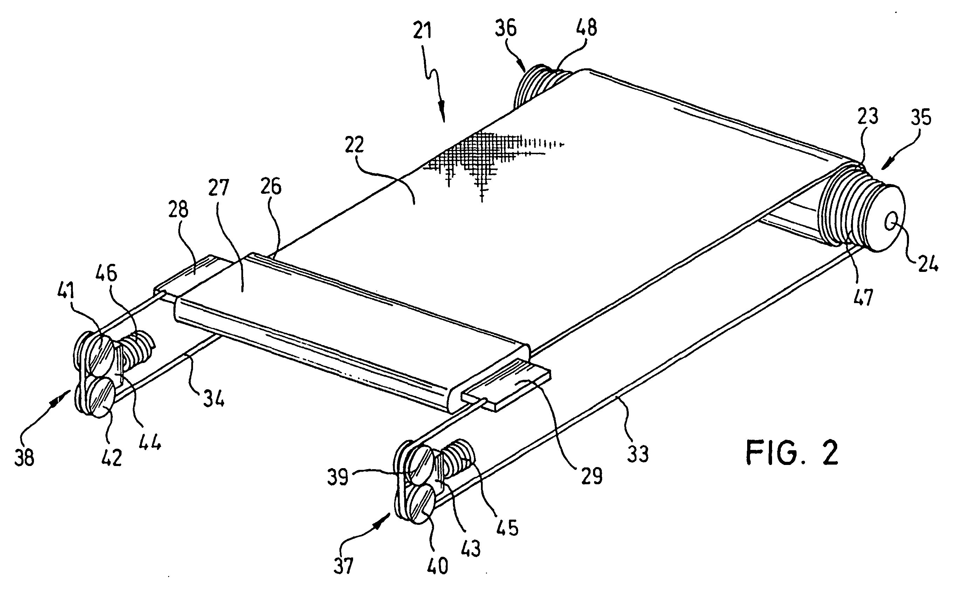

In die Rahmenanordnung 14 ist, unterhalb des Deckels 13 liegend, eine erfindungsgemäße Rolloeinrichtung 21 eingesetzt, die im nicht-eingebauten Zustand in Fig. 2 und im eingebauten Zustand in den Fign. 3, 4 und 5 gezeigt ist.

Die Rolloeinrichtung 21 umfaßt eine Rollobahn 22 aus opakem oder teilweise opakem Werkstoff, beispielsweise Stoff oder Kunststoff, und dient als Sonnenschutz für die durch den durchsichtigen oder durchscheinenden Deckel 13 abgedeckte Dachöffnung 12. In an sich bekannter Weise ist die Rollobahn 22 mit einer Endkante 23, im folgenden hintere Endkante genannt, fest mit einer Wickelspule 24 verbunden, die bevorzugt am hinteren Querrand der Dachöffnung 12 angrenzend an den hinteren Rahmenteil 16 in den seitlichen Rahmenteilen derselben drehbar gelagert ist, und zwar mittels seitlich von der Wickelspule 24 vorspringenden, fest mit dieser verbundenen Lagerzapfen 25, die mit der Längsmittenachse der Wickelspule 24 fluchten. Außerdem umfaßt die Rolloeinrichtung 21 an ihrer anderen Endkante 26, die im folgenden als vordere Endkante bezeichnet ist, einen Zugspriegel 27 mit einer flachen rechteckigen Griffleiste, von welchem seitlich Führungsschuhe 28, 29 vorspringen, welche vorzugsweise in nicht gezeigten Führungsschienen geführt sind, die in den seitlichen Rahmenteilen der Rahmenanordnung 14 vorgesehen sind. Es ist jedoch auch eine Anordnung ohne seitliche Führungen denkbar, da die Rollobahn 22 durch zwei Seile 33,34 ständig auf Zug gehalten wird. Der Zugspriegel 27 umfaßt an seiner unteren Seite eine Griffmulde 30, die bezogen auf die Fahrtrichtung des Fahrzeugs 10 durch vordere und hintere leistenartige Vorsprünge 31, 32 begrenzt ist, deren Funktion nachfolgend zusammen mit derjenigen der Griffmulde und der Griffleiste erläutert ist.

Die beiden zur Rolloeinrichtung 21 gehörenden Seile 33 und 34, die nachfolgend als, bezogen auf die Fahrtrichtung des Fahrzeugs 10, linkes Seil 33 und rechtes Seil 34 bezeichnet sind. Die Seile 33, 34 sind mit ihrem vorderen Ende fest mit dem Zugspriegel 27, bei der dargestellten Ausführungsform mit deren Führungsschuhen 28, 29 verbunden, während das hintere Ende der Seile 33, 34 mit den seitlichen Außenenden 35, 36 der Wickelspule 24 fest verbunden ist, die nachfolgend als linkes Außenende 35 bzw. rechtes Außenende 36 bezeichnet sind. Außerdem sind die Seile 33, 34 über Umlenkeinrichtungen 37, 38 geführt, die im folgenden als linke Umlenkeinrichtung 37 bzw. rechte Umlenkeinrichtung 38 bezeichnet sind. Die Umlenkeinrichtungen 37, 38 umfassen jeweils zwei Rollen 39, 40 bzw. 41, 42, die jeweils übereinander angeordnet aneinander angrenzend, jedoch außer Kontakt miteinander am vorderen Rahmenteil 15 um zu einander parallele Drehachsen drehbar gelagert sind, welche parallel zur Längsmittenachse der Wickelspule 24 verlaufen. Im einzelnen ist jedes Paar von Rollen 39, 40 und 41, 42 an einem Lagerblock 43 bzw. 44 drehbar gelagert, der seinerseits mit dem vorderen Rahmenteil 15 über eine Druckfeder 45 bzw. 46 festverbunden ist. Die Druckfedern 45, 46 sorgen dafür, daß der Verbund aus Rollobahn 22 und Seilen 33, 34 stets unter Zugspannung gehalten ist, so daß die Rollobahn 22 in jeder Position ebenso gespannt ist wie die Seile 33, 34. Die Druckfedern 45, 46 können auch durch Zugfedern ersetzt sein, die im Gegensatz zu den Druckfedern, die am innen gelegenen Ende der Umlenkeinrichtungen angeordnet sind, am außen gelegenen Ende zu positionieren sind. Eine Alternative zu den Zug- bzw. Druckfedern 45, 46, die zwischen den Lagerblöcken 43, 44 und dem vorderen Rahmenteil 15 fest angeordnet sind, können grundsätzlich mit derselben Wirkung in den Seilen 33, 34 angeordnete Zugfedern oder elastische Abschnitte derselben sein, zu welchem Zweck diese Seile unterbrochen und fest mit den Zugfedern verbunden sind.

Die Besonderheit der in Fig. 2 bis 5 dargestellten Rolloeinrichtung 21 betrifft die Ausbildung der linken und rechten Außenenden 35, 36 der Wickelspule 24 zum gemeinsamen Auf- und Abwickeln des Seils 33 bzw. 34. Da die Seile 33, 34 auf dieselbe Aufwickeleinrichtung aufgewickelt und von dieser abgewickelt werden, wie die Rollobahn 22, nämlich auf die bzw. von der Wickelspule 24, und da der Rollobahnwickel auf der Wickelspule 24 im Laufe des Aufwickelns dicker und im Laufe des Abwickelns dünner wird, was bezogen auf eine Umdrehung der Wickelspule 24 zu einem rascheren oder langsameren Aufwickeln der Rollobahn 22 führt, ist es zur Aufrechterhaltung der Spannung auf dem Verbund aus Rollobahn und Seilen 33, 34 ratsam, diesen Geschwindigkeitsgradienten auch auf das Auf/Abwickeln der Seile 33, 34 zu übertragen. Vorteilhaft wird dies dadurch bewirkt, daß die Wickelspulen-Außenenden 35, 36 nach außen konisch verjüngt verlaufen und auf ihrem Außenumfang eine spiralförmige Wickelnut 47 bzw. 48 aufweisen, deren Durchmesser von außen nach innen zunimmt. Die Seile 33, 34 sind innen an den Wickelspulen-Außenenden 35, 36 festgelegt, d.h. im Bereich des größten Durchmessers der spiralförmigen Wickelnuten 47, 48. Die Steigung der spiralförmigen Wickelnuten 47, 48 ist dabei ein Abbild des variierenden RollobahnWickels auf der Wickelspule 24, um die vorstehend angesprochene Spannung des Verbunds aus Rollobahn 22 und Seilen 33, 34 stets aufrechtzuerhalten. Wenn demnach die Rollobahn 22 vollständig von der Wickelspule 24 abgezogen bzw. abgewickelt ist, welcher Zustand in Fig. 2 annähernd gezeigt ist, sind die linken und rechten Seile 33, 34 vollständig auf die linken und rechten Wickelspulen-Außenenden 35, 36, von innen nach außen, aufgewickelt; d.h., in diesem Zustand treten die Seile 33, 34 vom durchmesserkleinsten Außenende der spiralförmigen Wickelnuten 47, 48 aus diesen Nuten aus. Wenn hingegen die Rollobahn 22 vollständig auf die Wickelspule 24 gewickelt ist und der Rollobahnwickel damit seinen größten Außendurchmesser einnimmt, sind die Seile 33, 34 vollständig von den Wickelspulen-Außenenden 35, 36 abgewickelt bzw. abgezogen und die Seile 33, 34 treten aus den durchmessergrößten Enden der Wickelnuten 47, 48 aus diesen Nuten aus.

Ein wesentlicher Vorteil, der durch die erfindungsgemäße Rolloeinrichtung 21 erzielt wird, besteht darin, daß sich der Verbund aus Rollobahn 22 und Seilen 33, 34 stets im Kräftegleichgewicht befindet und damit an der Stelle stehenbleibt, in welcher eine Bedienperson diese Anordnung mittels des Zugspriegels 27 bzw. der in dieser ausgebildeten Griffmulde 30 positioniert hat.

Wie aus Fig. 3, 4 und 5 hervorgeht, sind zur Festlegung der Endpositionen des Zugspriegels im Bereich des vorderen bzw. hinteren Rahmenteils 15 bzw. 16 bzw. am vorderen bzw. hinteren Querrand der Dachöffnung 12 Anschläge in Gestalt von Anschlägen 49, 50 vorgesehen, die vorzugsweise von den Kanten der Innenverkleidung gebildet werden und in Eingriff mit den Griffmulden-Vorsprüngen 31 und 32 gelangen. Die freien Enden der Anschlagbügel 49, 50, die zum Anschlag für die Griffleisten-Vorsprünge 31, 32 bestimmt sind, sind für einen "weichen" Anschlag mit einem Elastomer bezogen.

Während bei der vorstehend erläuterten Ausführungsform die Wickelspule 24 am hinteren Rand der Dachöffnung 12 und die Umlenkeinrichtungen 37 bzw. 38 am vorderen Rand der Dachöffnung 12 angeordnet sind, ist auch die umgekehrte Anordnung grundsätzlich möglich.

Fener kann alternativ zur Anordnung der beiden Rollen 39, 40 bzw. 41, 42) der Umlenkeinrichtungen 37 bzw. 38 übereinander eine Anordnung der Rollen nebeneinander oder die Verwendung einer einzigen Umlenkrolle vorgesehen sein.

Auch wenn die Rolloeinrichtung 21 in der dargestellten manuellen Betätigungsform aufgrund des jederzeit vorhandenen Kräftegleichgewichts zwischen Rollobahn 22 und Seilen 33 bzw. 34 eine komfortable Bedienung ermöglicht, ist dieselbe Rolloeinrichtung 21 in einer noch komfortableren Variante auch vorteilhaft mittels eines elektrischen Antriebs 51 antreibbar, der - wie in Fig. 4 angedeutet - im Bereich der Wickelspule 24 angeordnet ist und diese antreibt.

Es ist für den Fachmann selbstverständlich, daß der Begriff Seile für den erfindungsgemäßen Verwendungszweck auch Bänder, Fäden, Kabel, Schnüre oder andere langgestreckte, aufwickelbare Zugorgane umfaßt.

### Bezugszeichenliste

- 10: Fahrzeug
- 11: Fahrzeugdach
- 12: Dachöffnung
- 13: Deckel
- 14: Rahmenanordnung
- 15: vorderer Rahmenteil
- 16: hinterer Rahmenteil
- 17: seitlicher Rahmenteil
- 18: Verblendungsteil
- 19: Verblendungsteil
- 20: Verblendungsteil
- 21: Rolloeinrichtung
- 22: Rollobahn
- 23: hintere Endkante der Rollobahn
- 24: Wickelspule
- 25: Lagerzapfen der Wickelspule
- 26: vordere Endkante der Rollobahn
- 27: Zugspriegel
- 28: Führungsschuh
- 29: Führungsschuh
- 30: Griffmulde am Zugspriegel
- 31: vorderer Vorsprung
- 32: hinterer Vorsprung
- 33: linkes Seil
- 34: rechtes Seil
- 35: linkes Außenende der Wickelspule
- 36: rechtes Außenende der Wickelspule
- 37: linke Umlenkeinrichtung
- 38: rechte Umlenkeinrichtung
- 39: Rolle
- 40: Rolle
- 41: Rolle
- 42: Rolle
- 43: Lagerblock
- 44: Lagerblock
- 45: Druckfeder
- 46: Druckfeder
- 47: Wickelnut
- 48: Wickelnut
- 49: Anschlag
- 50: Anschlag
- 51: elektrischer Antrieb

## Patentansprüche

1. Sonnenschutz für ein Fahrzeugdach (11) mit einem einer Dachöffnung (12) zugeordneten durchsichtigen oder durchscheinenden Deckel (13) und einer unterhalb des Deckels (13) angeordneten Rolloeinrichtung (21) mit einer Rollobahn (22), deren eine Endkante (23) an einer Wickelspule (24) befestigt ist, die im Bereich eines Querrandes der Dachöffnung (12) angeordnet ist, und auf die die Rollobahn (22) aufwickelbar ist, wobei an den seitlichen Außenenden der anderen Endkante (26) der Rollobahn (22) Seile (33, 34) befestigt sind, welche um eine im Bereich des anderen Querrandes der Dachöffnung (12) angeordnete Umlenkeinrichtung (37, 38) zu der Wickelspule (24) geführt sind und wobei eine Einrichtung (45, 46) zum Spannen des Verbundes aus Rollobahn (22) und Seilen (33, 34) in Wickelrichtung vorgesehen ist, **dadurch gekennzeichenet**, daß die Seile (33, 34) an den seitlichen Außenenden (35, 36) der Wickelspule (24) befestigt und auf diese aufwickelbar sind, und daß die seitlichen Außenenden (35, 36) der Wickelspule (24) konisch verjüngt auslaufen und jeweils eine spiralförmige Wickelnut (47, 48) für das jeweilige Seil (33, 34) aufweisen, das mit dem innen liegenden durchmessergrößten Konusabschnitt des jeweiligen Wickelwellen-Außenendes (35, 36) fest verbunden ist.

2. Sonnenschutz nach Anspruch 1, **dadurch gekennzeichnet, daß** die Umlenkeinrichtung (37, 38) pro Seil (33, 34) zumindest eine Umlenkrolle (39, 42) aufweist, um welche das Seil (33, 34) geführt ist.

3. Sonnenschutz nach Anspruch 1 oder 2, **dadurch gekennzeichnet, daß** die Spanneinrichtung pro Seil (33, 34) zumindest eine Feder (45, 46) umfaßt.

4. Sonnenschutz nach Anspruch 3, **dadurch gekennzeichnet, daß** die Feder (45, 46) das Seil (33, 34) über die Umlenkeinrichtung (37, 38) indirekt mit Spannung beaufschlagt.

5. Sonnenschutz nach einem der vorhergehenden Ansprüche, **dadurch gekennzeichnet, daß** das mit den Seilen (33, 34) verbundene Ende der Rollobahn (22) einen Zugspriegel (27) zur manuellen Betätigung der Rollbahn (22) aufweist.

6. Sonnenschutz nach Anspruch 5, **dadurch gekennzeichnet, daß** am Zugspiegel (27) eine Griffleiste mit einer nach unten offenen Griffmulde (30) ausgebildet ist.

7. Sonnenschutz nach Anspruch 5 oder 6, **dadurch gekennzeichnet, daß** der Zugspriegel (27) seitlich vorspringende Führungsschuhe (28, 29) aufweist, die in Führungsschienen im Bereich der Seitenränder der Dachöffnung (12) geführt sind.

8. Sonnenschutz nach einem der Ansprüche 5 bis 7, **dadurch gekennzeichnet, daß** an den Querrändem der Dachöffnung (12) Anschläge (49, 50) für den Zugspriegel (27) vorgesehen sind.

9. Sonnenschutz nach einem der Ansprüche 1 bis 8, **dadurch gekennzeichnet, daß** ein elektrischer Antrieb (51) für die Wickelspule (24) vorgesehen ist.

## Claims

1. Sun-blind for a vehicle roof (1), having a transparent or translucent panel (13) assigned to a roof opening (12) and a roller-blind device (21) arranged underneath the panel (13) and having a roller-blind sheet (22) whose one end edge (23) is fixed to a winding spool (24) which is arranged in the region of a transverse edge of the roof opening (12) and onto which the roller-blind sheet (22) can be wound, cords (33,34) being fixed to the lateral outer ends of the other end edge (26) of the roller-blind sheet (22), which cords (33, 34) are led to the winding spool (24) around a deflection device (37, 38) arranged in the region of the other transverse edge of the roof opening (12), and a device (45, 46) being provided for tensioning the assembly comprising roller-blind sheet (22) and cords (33, 34) in the winding direction, **characterized in that** the cords (33, 34) are fixed to the lateral outer ends (35, 36) of the winding spool (24) and can be wound onto the said ends, and **in that** the lateral outer ends (35, 36) of the winding spool (24) run out with a conical taper and in each case have a spiral winding groove (47, 48) for the respective cord (33, 34), which is firmly connected to the inner, largest-diameter, conical section of the respective winding shaft outer end (35, 36).

2. Sun-blind according to Claim 1, **characterized in that** the deflection device (37, 38) for each cord (33, 34) has at least one deflection roller (39, 42) around which the cord (33, 34) is led.

3. Sun-blind according to Claim 1 or 2, **characterized in that** the tensioning device for each cord (33, 34) comprises at least one spring (45, 46).

4. Sun-blind according to Claim 3, **characterized in that** the spring (45, 46) applies tension indirectly to the cord (33, 34) via the deflection device (37, 38).

5. Sun-blind according to one of the preceding claims, **characterized in that** the end of the roller-blind sheet (22) that is connected to the cords (33, 34) has a pulling slat (27) for the manual operation of the roller-blind sheet (22).

6. Sun-blind according to Claim 5, **characterized in that** a grip strip having a grip depression (30) open at the bottom is formed on the pulling slat (27).

7. Sun-blind according to Claim 5 or 6, **characterized in that** the pulling slat (27) has laterally projecting guide shoes (28, 29) which are guided in guide rails in the region of the side edges of the roof opening (12).

8. Sun-blind according to one of Claims 5 to 7, **characterized in that** stops (49, 50) for the pulling slat (27) are provided on the transverse edges of the roof opening (12).

9. Sun-blind according to one of Claims 1 to 8, **characterized in that** an electric drive (51) is provided for the winding spool (24).

## Revendications

1. Pare-soleil pour un toit (11) de véhicule, comprenant un capot (13) transparent ou translucide affecté à une ouverture (12) du toit, et un dispositif (21) à store enroulable, placé au-dessous du capot (13) et muni d'un store (22) dont l'un (23) des bords extrêmes est fixé à un enrouleur (24) qui est disposé dans la région d'un bord transversal de l'ouverture (12) du toit, et sur lequel le store (22) peut être enroulé, sachant que des filins (33, 34), fixés aux extrémités extérieures latérales de l'autre bord extrême (26) du store (22), sont guidés vers l'enrouleur (24) autour d'un système de renvoi (37, 38) installé dans la région de l'autre bord transversal de l'ouverture (12) du toit, et sachant qu'un système (45, 46) est prévu pour imposer, dans la direction d'enroulement, une tension à l'assemblage constitué du store (22) et des filins (33, 34), **caractérisé par le fait que** les filins (33, 34) sont fixés aux extrémités extérieures latérales (35, 36) de l'enrouleur (24), et peuvent être enroulés sur ce dernier ; et **par le fait que** lesdites extrémités extérieures latérales (35, 36) dudit enrouleur (24) s'achèvent avec rétrécissement tronconique et sont pourvues, respectivement, d'une rainure spiroïdale d'enroulement (47, 48) destinée au filin respectif (33, 34), lequel est relié rigidement au segment tronconique intérieur, de diamètre maximal, de l'extrémité extérieure considérée (35, 36) de l'arbre enrouleur.

2. Pare-soleil selon la revendication 1, **caractérisé par le fait que** le système de renvoi (37, 38) comporte, pour chaque filin (33, 34), au moins un rouleau de renvoi (39, 42) autour duquel ledit filin (33, 34) est guidé.

3. Pare-soleil selon la revendication 1 ou 2, **caractérisé par le fait que** le système de tension comprend au moins un ressort (45, 46) pour chaque filin (33, 34).

4. Pare-soleil selon la revendication 3, **caractérisé par le fait que** le ressort (45, 46) impose indirectement une tension au filin (33, 34), par l'intermédiaire du système de renvoi (37, 38).

5. Pare-soleil selon l'une des revendications précédentes, **caractérisé par le fait que** l'extrémité du store (22), reliée aux filins (33, 34), comporte une planchette de traction (27) en vue de l'actionnement manuel dudit store (22).

6. Pare-soleil selon la revendication 5, **caractérisé par le fait qu'**un listel de préhension, muni d'une augette de préhension (30) ouverte vers le bas, est façonné sur la planchette de traction (27).

7. Pare-soleil selon la revendication 5 ou 6, **caractérisé par le fait que** la planchette de traction (27) comporte des patins de guidage (28, 29) qui font saillie latéralement et sont guidés, dans des glissières de guidage, dans la région des bords latéraux de l'ouverture (12) du toit.

8. Pare-soleil selon l'une des revendications 5 à 7, **caractérisé par le fait que** des taquets (49, 50), dédiés à la planchette de traction (27), sont prévus sur les bords transversaux de l'ouverture (12) du toit.

9. Pare-soleil selon l'une des revendications 1 à 8, **caractérisé par le fait qu'**un entraînement électrique (51) est prévu pour l'enrouleur (24).
